# EUROPEAN PATENT APPLICATION

(11) **EP 3 528 186 A1**
(43) Date of publication of application: **21.08.2019**
(21) Application number: 18157412.0
(22) Date of filing: 19.02.2018
(51) Int. Cl.: G06Q 10/06, G06F 17/30

(54) **METHOD AND SYSTEM OF PROVIDING ACCESS TO TIME-SERIES DATA IN A CLOUD COMPUTING ENVIRONMENT**

(71) Applicant: Siemens Aktiengesellschaft, 80333 München (DE)
(72) Inventor: OSIGUS, Heiko, 76870 Kandel (DE); SELLE, Sven, 90489 Nürnberg (DE); BENDER, Philipp, 76761 Rülzheim (DE)
(74) Representative: Isarpatent

(57) **Abstract**

The present invention relates to a method and system of providing access to time-series data in a cloud computing environment (100). In one embodiment, a method comprises capturing a set of input parameters for accessing time-series data associated with at least one asset (108A-N) via a graphical user interface (124A-N) of a user device (122A-N) connected to a cloud computing system (102). The asset (108AN) is located in a remote facility (106) and communicatively connected to the cloud computing system (102). The method comprises generating an application programming interface (API) request for retrieving the time-series data of the asset (108A-N) based on the captured set of input parameters. Then, the method comprises retrieving the time-series data of the asset (108A-N) from a time-series database (120) of the cloud computing system (102) using an appropriate API (118) in response to the API request. Accordingly, the method comprises rendering the retrieved time-series data of the asset (108A-N) on the graphical user interface (124A-N) of the user device (122A-N).

## Description

The present invention relates to the field of cloud computing system and more particularly relates to a method and system of accessing application programming interfaces in a cloud computing environment.

With advent of cloud computing technology, a large number of devices are connected to a cloud computing system via the Internet. The devices may be located in a remote facility connected to the cloud computing system. For example, the devices can be equipments, sensors, actuators, robots, machinery in an industrial set-up(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographical distributed, connected with each other via a network. A dedicated platform (hereinafter referred to as 'cloud platform') is installed on the servers/processors for providing above functionality as a service (hereinafter referred to as 'cloud service'). The cloud platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users. Currently, to avail a particular cloud service, a user needs to interact with associated API. For example, the APIs may enable a user to access time-series data of assets stored in a time-series database. However, working with the application programming interfaces to access the time-series data is not a straight forward activity and may require skilled personnel. This may restrict the number of users using the cloud computing system. Also, this may limit the ability of the user to work with different APIs for accessing time-series data.

In light of the above, there exists a need to provide a cloud computing system which can provide easy access to time-series data of assets.

Therefore, it is an object of the present invention to provide a cloud computing system for providing easy access to time-series data of assets via an interactive graphical user interface.

The object of the present invention is achieved by a method of capturing a set of input parameters for accessing time-series data associated with at least one asset located in a facility (e.g., Industrial Plant) via an interactive graphical user interface of a user device connected to a cloud computing system. The interactive graphical user interface is an interface which allows users to select input parameters for accessing time-series data of assets. In other words, the interactive graphical user interface is an interface which enables the users to interact with application programming interfaces (APIs) for accessing time-series data by selecting one or more input parameters. The method comprises generating a request to retrieve the time-series data associated with the at least one asset from a time-series database of the cloud computing system based on the captured set of input parameters. The method comprises retrieving the time-series data associated with the at least one asset from the time-series database based on the generated request. The method comprises providing the retrieved time-series data associated with the at least one asset to the user device. For example, the retrieved time-series data may be raw data values or aggregated data values.

In a preferred embodiment, the method comprises providing an interactive graphical user interface on the user device, and capturing the set of input parameters based on one or more operations performed on the interactive graphical user interface by the user. For example, one or more operations are performed by selecting the at least one asset and at least one associated aspect via the graphical user interface. The set of input parameters comprises an asset whose time-series data is to be retrieved, one or more aspect associated with the asset, time period associated with the time-series data, data type, and/or aggregation methods. The method comprises dynamically generating a virtual table comprising the captured set of input parameters.

In the preferred embodiment, the method comprises generating an application programming interface (API) request to retrieve the time series data using the virtual table. Furthermore, the method comprises accessing an application programming interface configured for retrieving time-series data associated with the at least one asset using the API request. For example, at least one function associated with the application programming interface is executed in response to the API request. The method comprises retrieving the time-series data associated the at least one asset from the time-series database in response to accessing the respective application programming interface.

In the preferred embodiment, the method comprises rendering the retrieved time-series data associated with the at least one asset on the user device.

The object of the present invention is achieved by a system comprising one or more servers comprising a data access manager stored therein in the form of machine-readable instructions and executable by the one or more servers. The data access manager module is configured to perform the above method described above. Furthermore, the system comprises a time-series database comprising one or more data models storing time-series data associated with a plurality of assets in at least one facility. Additionally, the system comprises one or more application programming interfaces, each application programming interface comprises one or more functions capable of accessing the time-series data stored in at least one of the data models.

The object of the present invention is achieved by a cloud computing environment comprising the above-described system, and one or more user devices communicatively coupled to the system. Each user device is configured to display an interactive graphical user interface.

The object of the present invention is achieved by a computer program product comprising machine-readable instructions stored therein, that when executed by the one or more servers, cause the one or more servers to perform above described method.

The above-mentioned and other features of the present invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
FIG 1 is a schematic representation of a cloud computing environment, according to one embodiment of the present invention;
FIG 2 is a block diagram of a data access manager as shown in FIG 1, according to the embodiment of the present invention;
FIG 3 is a process flowchart depicting an exemplary method of providing access to time-series data stored in a cloud computing system, according the embodiment of the present invention;
FIG 4 is a schematic representation of components of the cloud computing system configured to provide time-series data of the assets, according to an embodiment of present invention;
FIG 5 is a screenshot view of an interactive graphical user interface enabling selection of input parameters for accessing time-series data of the assets in the industrial plant;
FIG 6 is a schematic representation of a virtual table which contains a set of input parameters selected by a user via a graphical user interface;
FIG 7 is a schematic representation of a graphical user interface displaying time-series data of an asset which is retrieved from the time-series database based on the input parameters captured in the virtual table; and
FIG 8 is a screenshot view of a graphical user interface displaying a visualization of time-series data of the asset selected in the asset field in FIG 5.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

The terms 'API call' and 'API request' are interchangeably used throughout the document.

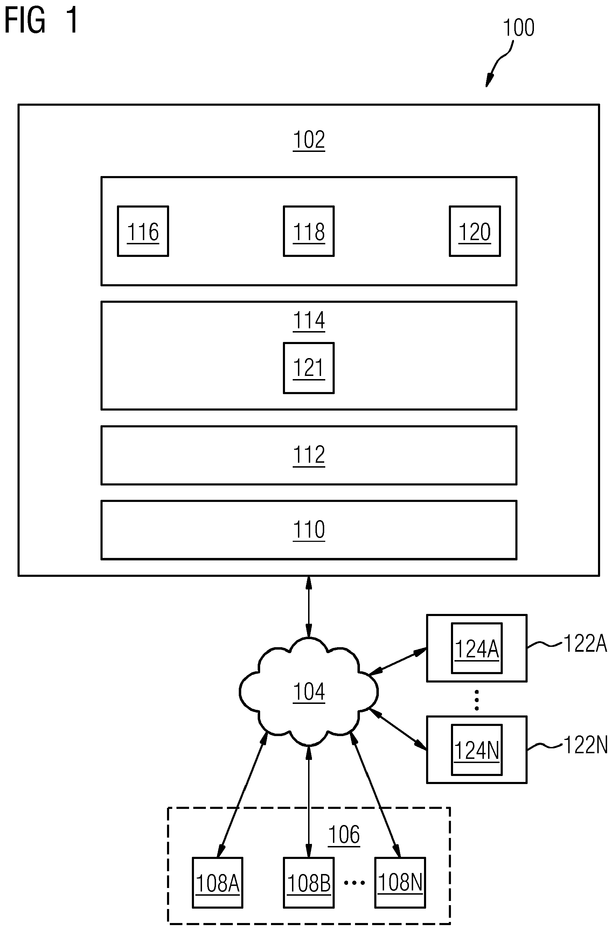

FIG 1 is a schematic representation of a cloud computing environment 100, according to an embodiment of the present invention. Particularly, FIG 1 depicts the cloud computing system 102 capable of providing cloud services for managing an industrial plant 106 comprising assets 108A-N. The cloud computing system 102 is connected to assets 108A-N in the industrial plant 106 via a network 104 (e.g., Internet). The assets 108A-N may include servers, robots, switches, automation devices, motors, valves, pumps, actuators, sensors and other industrial equipments. Although, FIG 1 illustrates the cloud computing system 102 connected to a single industrial plant 106, one skilled in the art can envision that the cloud computing system 102 can be connected to several industrial plants 106 located at different locations via the network 104.

The cloud computing system 102 is also connected to user devices 122A-N via the network 104. The user devices 122A-N can access the cloud computing system 102 for accessing cloud services (e.g., visualization service). The user devices 122A-N can be a laptop computer, desktop computer, tablet computer, smart-phone and the like. The user devices 122A-N can access cloud services (such as providing performance visualization of assets 108A-N) via graphical user interfaces 124A-N.

The cloud computing system 102 may be a public cloud, private cloud or a hybrid cloud configured to provide dedicated cloud services to its users. The cloud computing system 102 comprises a network interface 110, hardware resources and OS 112, and a cloud platform 114. The network interface 110 enables communication between the cloud computing system 102 and the industrial plants 106. Also, the network interface 110 enables communication between the cloud computing system 102 and the user devices 122A-N.

The hardware resources and OS 112 may include one or more servers on which an operating system (OS) is installed. The servers may comprise one or more processing units, one or more storage devices (e.g., memory units) for storing data (e.g., time-series database with time-series data of assets 108A-N) and machine-readable instructions (e.g., applications 116 and application programming interfaces 118), and other peripherals required for providing cloud computing functionality.

The cloud platform 114 is a platform which enables functionalities such as data storage, data analysis, data visualization, data communication, etc. using the hardware resources and OS 112, and delivers the aforementioned cloud services using the application programming interfaces 118 deployed therein. The cloud platform 114 may comprise a combination of dedicated hardware and software built on top of the hardware and OS 112.

According to the present invention, the cloud platform 114 comprises a data access manager 121 which provides easy access to time-series data of the assets 108A-N stored in the time-series database 120 via the application programming interfaces 118 without a need for skilled personnel. The data access manager 121 is stored in the form of machine-readable instructions stored on the cloud computing system 102, executable by the processing units. The data access manager 121 is explained in greater detail in the description which follows.

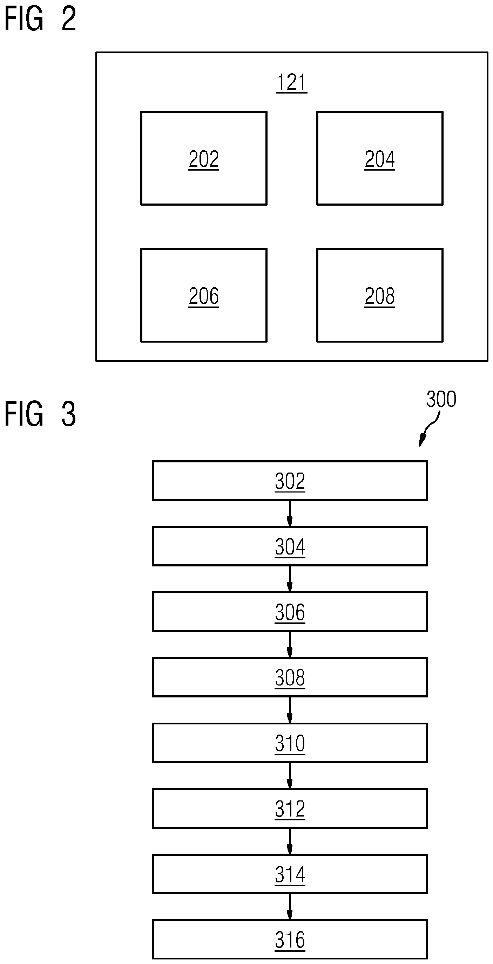

FIG 2 is a block diagram of a data access manager 121 of FIG 1, according to an embodiment of the present invention. The data access manager 121 comprises an input capturing module 202, an API call generator 204, a data retrieval module 206, and a data rendering module 208.

The input capturing module 202 is configured to provide an interactive graphical user interface to a user for selecting input parameters associated with retrieval of time-series data of an asset. The input capturing module 202 is configured to capture one or more input parameters in response to one or more operations performed by the user on the interactive graphical user interface.

The API call generator 204 is configured to generate an API request to retrieve the time-series data of the asset using the captured input parameters. The data retrieval module 206 is configured to retrieve the time-series data of the asset from the time-series database 120 by executing an API deployed on the cloud computing system 102 based on the API request. For example, the API comprises a function which is executed based on the API request. Execution of the function results in retrieval of the desired time-series data of the asset from the time-series database 120.

The data rendering module 208 is configured to provide the retrieved time-series data of the asset to the user devices 122A-N. In an exemplary implementation, the data rendering module 208 is configured to transform the retrieved time-series data of the asset in a desired output format (table, graphs, etc.) and render the time-series data of the asset in the desired output format on the user device 122A-N. In this manner, time-series data of assets 108A-N is accessed from the cloud computing system 102 without having to design dedicate application for accessing specific APIs deployed on the cloud computing system 102.

FIG 3 is a process flowchart 300 depicting an exemplary method of providing access to time-series data stored in the cloud computing system 102, according an embodiment of the present invention. Consider that data associated with the assets 108A-N in the industrial plant 108 is continuously collected and stored in a time-series database 120. A user (e.g., an operator of one of the assets 108A-N) wishes to monitor the asset (e.g., the asset 108A) based on the stored time-series data. The user may use a user device (e.g., the user device 122A) connected to the cloud computing system 102 to request the time-series data of the asset 108A (e.g., via an application).

Accordingly, at step 302, an interactive graphical user interface (e.g., the graphical user interface 124A) is provided on the user device 122A by the cloud computing system 102. The interactive graphical user interface 124A is displayed on the user device 122A in response to a request to access time-series data of the asset 108A. The graphical user interface 124A may be a web interface associated with an application deployed on the cloud computing system 102. For example, the application may be deployed for monitoring performance of the asset 108A.

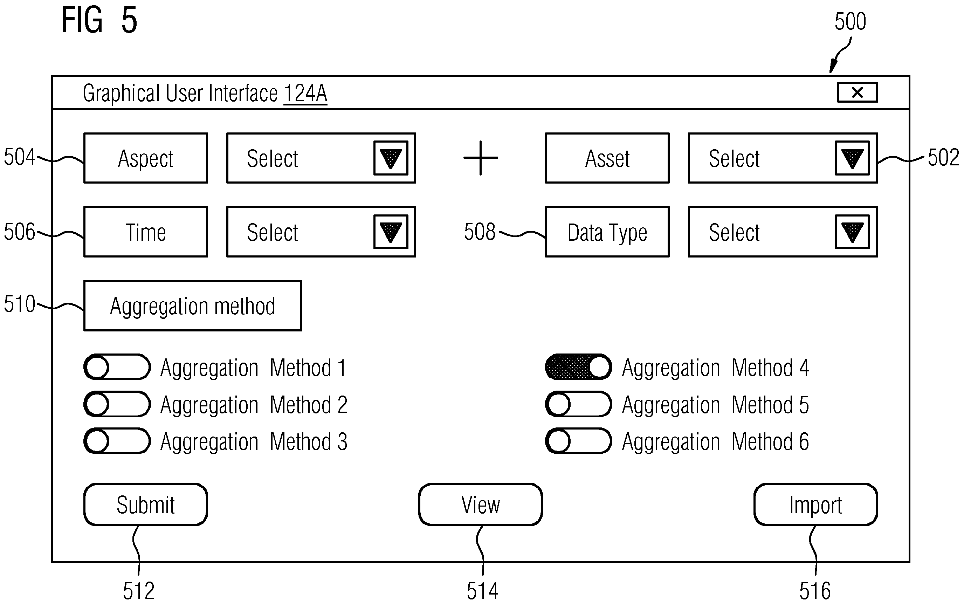

At step 304, one or more input parameters associated with retrieving of the time-series data of the asset 108A are selected via the graphical user interface 124A. The one or more input parameters may include an asset whose time-series data is to be retrieved, one or more aspects associated with the asset, time period associated with the time series data to be retrieved, type of data values (e.g., raw data values or aggregated data values), and/or aggregation methods. For example, the user of the user device 122A performs one or more operations on the graphical user interface 124A which may eventually result in selection of one or more input parameters. Exemplary interactive graphical user interface 124A is illustrated in FIG 5.

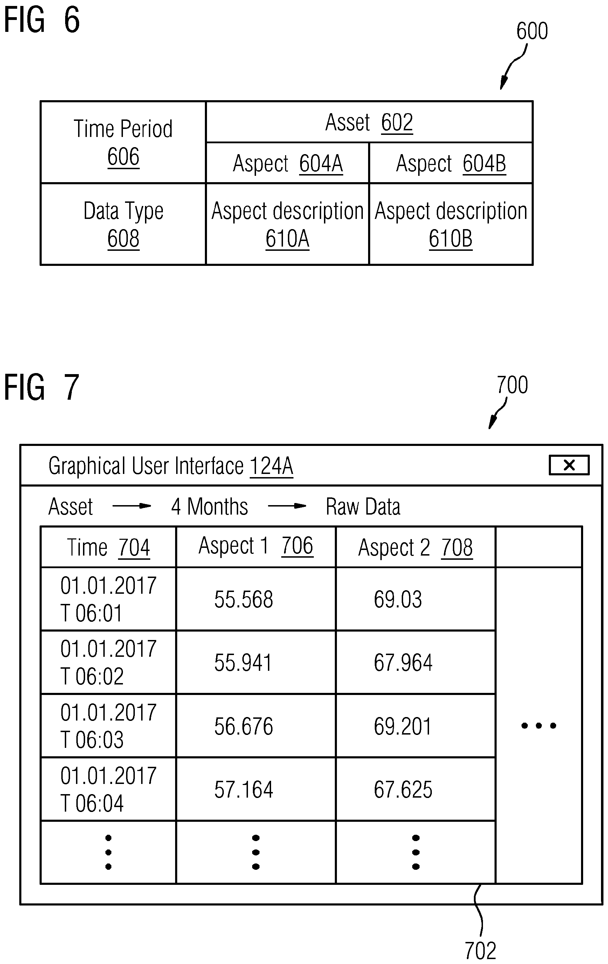

At step 306, the selected input parameters for retrieving the time-series data of the asset 108A are captured at the cloud computing system 102 via the graphical user interface 124A. At step 308, a virtual table with the captured set of input parameters is dynamically generated. An exemplary virtual table is shown in FIG 6.

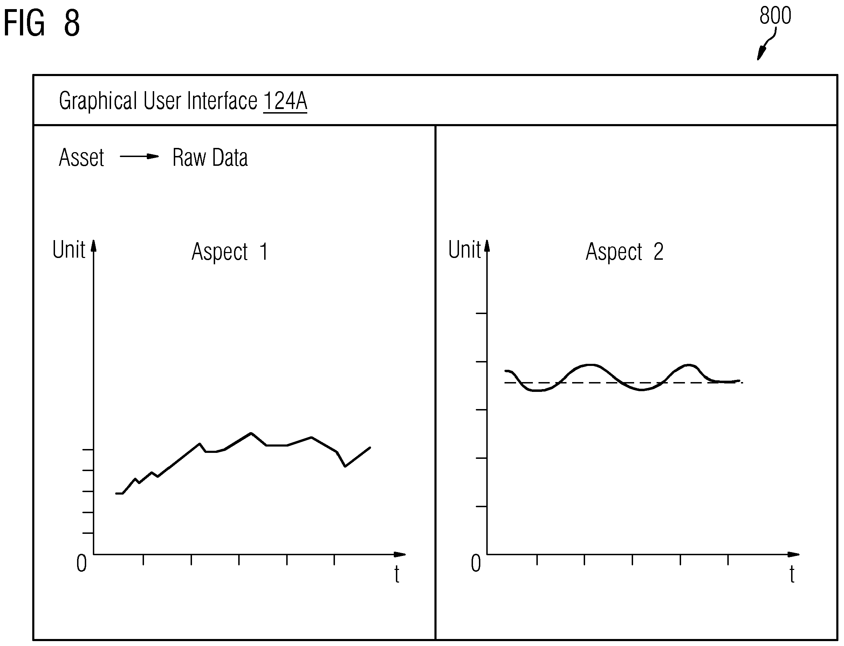

At step 308, an application programming interface (API) request (e.g., API call) to retrieve the time-series data of the asset 108A is generated using the virtual table. That is, the captured input parameters in the virtual table are transformed into the API request. At step 310, an appropriate application programming interface configured for retrieving time-series data of the asset 108A is accessed using the API request. For example, at least one function of the application programming interface is executed in response to the API request. At step 312, the time-series data of the asset 108A is retrieved from the time-series database 120 in response to accessing the application programming interface. Exemplary time series data of the asset 108A retrieved from the time-series database 120 is illustrated in FIG 7. At step 314, the retrieved time-series data of the asset 108A is rendered on the graphical user interface 124A of the user device 122A. Exemplary graphical user interface 124A displaying the time-series data of asset 108A and its aspects is shown in FIG 8.

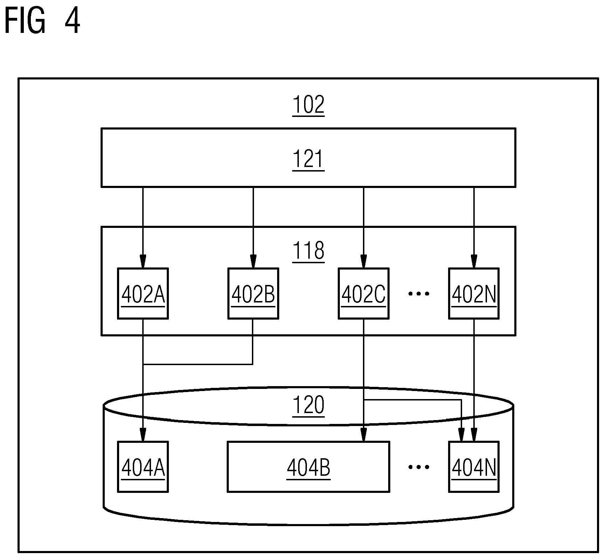

FIG 4 is a schematic representation 400 of components of the cloud computing system 102 configured to provide time-series data of assets 108A-N, according to an embodiment of present invention. As shown in FIG 4, the cloud computing system 102 enables users to monitor performance/condition of assets 108A-N. The cloud computing system 102 employs the data access manager 121, the APIs 118, and the time-series database 120. The API 118 employs functions 402A-N which enables the data access manager 121 to access time-series data of the assets 108A-N from the time-series database 120. The time-series database 120 comprises data models 404A-N which stores raw and/or aggregated data of the assets 108A-N. It can be noted that each of the data models 404A-N stores time-series data of particular asset or industrial plant. Also, each of the functions 402A-N is configured to access one or more data models 404A-N in the time-series database 120.

The data access manager 121 enables users to select a set of input parameters (e.g., asset, aspects, time period, data type, etc.) via an interactive graphical user interface displayed on a user device (e.g., the user device 124A) to access time-series data of an asset 108A. The data access manager 121 automatically captures the selected input parameters in a virtual table and transforms the input parameters in the virtual table into an API call. The data access manager 121 forwards the API call to the appropriate API 118 responsible for retrieving time-series data from the time-series database 120.

The API 118 invokes one of the functions 402A-N to retrieve the time-series data of the asset 108A based on the received API call. For example, the API 118 determines an asset identifier associated with the asset 108A whose time-series data is requested from the API call. Then, the API 118 determines a data model which stores the requested time-series data of the asset 108A from the plurality of data models 404A-N stored in the time-series database 120.

Finally, the API 118 determines one of the functions 402A-N which is configured to access the determined data model. For the purpose of illustration, consider that the data model 404A stores the requested time-series data of the asset 108A. It can be seen from FIG 4 that the function 402A and the function 402B can access the data model 404A. In such situations, the API 118 may invoke any of the available functions 402A and 402B.

Let us consider that, the API 118 invokes the function 402A to access the data model 404A. Accordingly, the function 402A is executed based on the API call. As a result, the function 402A accesses the data model 404A and retrieves the requested time-series data of the asset 108A. The retrieved time-series data may be of particular data type and for time period specified in the API call. The API 118 returns the retrieved time-series data of the asset 108A to the data access manager 121. The data access manager 121 provides the requested time-series data of the asset 108A in a desired output format to the user device 122A, which is then displayed on the graphical user interface 124A. Alternatively, the data access manager 121 may provide the requested time-series data of the asset 108A to a visualization application deployed on the cloud computing system 102. The visualization application may process the time-series data of the asset 108A and renders a visualization of the time-series data on the user device in a specific output format. The visualization of the time-series data in the specific output format provides deeper insights into performance/condition of the asset 108A. The deeper insights into performance/condition of the asset 108A may enable operator or field engineer to take further actions for efficient operation of the asset 108A and the industrial plant 106.

FIG 5 is a screenshot view 500 of an interactive graphical user interface 124A enabling selection of input parameters for accessing time-series data of the assets 108A-N in the industrial plant 106. The graphical user interface 124A displays an asset field 502, an aspect field 504, a time field 506, a data type field 508, an aggregation method field 510, a submit button 512, a view button 514, and an import button 516.

The asset field 502 enables a user to select an asset from a list of assets 108A-N displayed via a drop down menu. The user can select an asset whose time-series data is desired to be accessed from the time-series database 120 using APIs 118. For example, the asset may be a honing device, a motor, a pump, a furnace, a turbine, a sensor, an actuator, a controller, a robot, a windmill, a computer-tomography machine, a CNC machine, and so on.

The aspect field 504 enables the user to select one or more aspects associated with the selected asset. For example, if the user has selected 'motor' in the asset field 502, then the aspect field 504 enables the user to select aspects such as speed, revolutions per minute, and so on.

The time field 506 enables the user to select a time period associated with the time-series data of the asset to be retrieved. The user can select time period in the time field 506 via a drop down menu or a calendar widget. The time period may be in hours, days, weeks, months or years.

The data type field 508 enables the user to select data type associated with the time-series data to be retrieved. The data type field 508 displays a drop down menu with options such as 'raw data values' or 'aggregated data values'.

The aggregation method field 510 enables the user to select one or more aggregation methods associated with the time-series data to be retrieved via radio buttons. The user selects the aggregation methods if the user has selected the data type as 'aggregated data values' in the data type field 508.

The submit button 512 enables the user to submit a request to retrieve the time-series data of the asset from the time-series database 120 when the user has selected the input parameters in the fields 502 to 510. The view button 514 enables the user to view the selected input parameters in the graphical user interface 124A. The import button 516 enables the user to import the selected input parameters in a specific file format (e.g., portable document format) or another location.

FIG 6 is a schematic representation of a virtual table 600 which contains a set of input parameters selected by a user via a graphical user interface. The virtual table 600 comprises an asset block 602, aspect blocks 604A and 604B, time period block 606, data type block 608, and aspect description blocks 610A and 610B.

The asset block 602 indicates an unique identifier of an asset selected by the user in the asset field 502 of FIG 5. The aspect blocks 604A and 604B indicates aspects selected by the user in the aspect field 504 of FIG 5. The time period block 606 indicates time period selected by the user in the time field 506 of FIG 5.

The data type block 608 indicates data type selected by the user in the data type field 508 of FIG 5. Also, the data type block 608 may include information on any aggregation methods if the data type is selected as 'aggregated data values'.

FIG 7 is a schematic representation 700 of a graphical user interface 124A displaying time-series data of an asset which is retrieved from the time-series database 120 based on the input parameters captured in the virtual table 600. The graphical user interface 124 displays the raw time-series data of the asset selected in the asset field 502 of FIG 5 for four months in a tabular format 702. The tabular format 702 comprises a time field 704, an aspect 1' field 706, and an 'aspect 2' field 708. The time field 704 indicates time stamp corresponding to the time-series data displayed in the 'aspect 1' field 706 and the 'aspect 2' field 708. The 'aspect 1' field 706 and the 'aspect 2' field 708 displays time-series data values corresponding to the time stamps in the time field 704.

FIG 8 is a screenshot view 800 of a graphical user interface 124A displaying a visualization of time-series data of an asset selected in the asset field in FIG 5. The graphical user interface view 124A displays graphical visualizations of the time-series data for the aspect 1 and the aspect 2 associated with the asset. The graphical visualization facilitates the user to monitor performance of the asset and take necessary actions for efficient and fail-safe operation of the industrial plant 106.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A method of providing access to time-series data in a cloud computing environment (100), comprising:
capturing a set of input parameters for accessing time-series data associated with at least one asset (108A-N) located in a facility (106) via a graphical user interface (124A-N) of a user device (122A-N) connected to a cloud computing system (102);
retrieving the time-series data associated with the at least one asset (108A-N) from a time-series database (120) of the cloud computing system (102) based on the captured set of input parameters using an application programming interface (118); and
providing the retrieved time-series data associated with the at least one asset (108A-N) to the user device (122A-N).

2. The method according to claim 1, wherein retrieving the time-series data associated with the at least one asset (108A-N) from the time-series database (120) comprises:
generating a request to retrieve the time-series data associated with the at least one asset (108A-N) from the time-series database (120) based on the captured set of input parameters; and
retrieving the time-series data associated with the at least one asset (108A-N) from the time-series database (120) based on the generated request.

3. The method according to claim 1 or 2, wherein providing the retrieved time-series data associated with the at least one asset (108A-N) to the user device (122A-N) comprises:
rendering the retrieved time-series data associated with the at least one asset (108A-N) on the user device (122A-N).

4. The method according to any of the claims claim 1 to 3, wherein capturing the set of input parameters for accessing the time-series data associated with the at least one asset (108A-N) comprises:
providing the interactive graphical user interface (124A-N) on the user device (122A-N);
capturing the set of input parameters based on one or more operations performed on the interactive graphical user interface (124A-N) by the user; and
dynamically generating a virtual table (600) comprising the captured set of input parameters.

5. The method according to claim 2 or 4, wherein generating the request to retrieve the time-series data associated with the at least one asset (108A-N) comprises:
generating an application programming interface (API) request to retrieve the time series data using the virtual table (600).

6. The method according to claim 2 or 5, wherein retrieving the time-series data associated with the at least one asset (108A-N) based on the generated request comprises:
accessing an appropriate application programming interface (API) (118) configured for retrieving time-series data associated with the at least one asset (108A-N) using the API request; and
retrieving the time-series data associated the at least one asset (108A-N) from the time-series database (120) in response to accessing the respective application programming interface (118).

7. The method according to any of the claims 1-6, wherein the set of input parameters comprises an asset (118A-N) whose time-series data is to be retrieved, one or more aspect associated with the asset (118A-N), time period associated with the time-series data, data type, and/or aggregation methods.

8. The method according to claim 5 or 6, wherein the accessing the appropriate application programming interface (118) configured for retrieving the time-series data comprises:
executing at least one function associated with the appropriate application programming interface (118) in response to the API request.

9. The method according to claim 1, further comprising:
selecting the set of input parameters on the graphical user interface (124A-N).

10. A system (102) comprising:
one or more servers (112), wherein at least one server (112) comprises a data access manager (121) stored therein in the form of machine-readable instructions and executable by the at least one server (112), wherein the data access manager (121) is configured to perform a method according to claims 1 to 9.

11. The system (102) according to claim 10, further comprising:
a time-series database (120) comprising one or more data models (404A-N) storing time-series data associated with a plurality of assets (108A-N) in at least one facility (106).

12. The system (102) according to claim 11, further comprising:
one or more application programming interfaces (118), each application programming interface (118) comprises one or more functions (402A-N) capable of accessing the time-series data stored in at least one of the data models (404A-N).

13. A cloud computing environment (100) comprising:
a system (102) according to claims 10 to 12; and
one or more user devices (122A-N) communicatively coupled to the system (102).

14. The cloud computing environment (102) according to claim 13, wherein each user device (122A-N) is configured to display an interactive graphical user interface (124A-N).

15. A computer program product comprising machine-readable instructions stored therein, that when executed by one or more servers (112), cause the one or more servers (112) to perform a method according to claims 1 to 9.
